# EUROPÄISCHE PATENTSCHRIFT

(11) **EP 0 473 997 B1**
(45) Veröffentlichungstag und Bekanntmachung des Hinweises auf die Patenterteilung: **27.10.1993**
(21) Anmeldenummer: 91113803.0
(22) Anmeldetag: 17.08.1991
(51) Int. Cl.: B60B 33/00

(54) **Lenkrolle**
Castor
Roulette à pivot

(30) Priorität: 01.09.1990 DE 9012529 U
(43) Veröffentlichungstag der Anmeldung: 11.03.1992
(73) Patentinhaber: Haco-Rollen-Vertrieb GmbH & Co. KG, D-42929 Wermelskirchen-Tente (DE)
(72) Erfinder:
(74) Vertreter: Sturies, Herbert

(56) Entgegenhaltungen:
- EP-A- 0 440 068
- DE-A- 3 341 063
- DE-U- 8 804 581
- FR-A- 1 546 211
- US-A- 1 930 622
- US-A- 3 213 483

## Beschreibung

Die Erfindung bezieht sich auf eine Lenkrolle für damit verfahrbar auszurüstende Geräte, wie z.B. Müllkontainer, Krankenbetten od.dgl., gemäß dem Oberbegriff des Anspruchs 1, mit einer das Laufrad tragenden Lenkrollengabel und einem an deren Rücken angebrachten sowie am Gerät zu befestigenden Schwenklager, das aus einem einteiligen Schwenklagertopf und einer darin über einen oberen und unteren Kugellaufkranz schwenkbeweglich gelagerten Schwenklagerplatte besteht, wobei die Kugellaufkränze zwischen den Außenumfängen der Schwenklagerplatte einerseits und der im wesentlichen zylindrischen Wandung des Schwenklagertopfes andererseits liegen, deren die Schwenklagertopföffnung umgebender offener Rand über den an ihm anliegenden Kugellaufkranz um dessen zuvor eingelegte Kugeln umgebördelt worden ist.

Lenkrollen obiger Art sind bekannt, z.B. durch die DE-A- 33 41 063. Die solide Ausbildung ihres aus dem Schwenklagertopf und der darin über die Kugelkränze gelagerten Schwenklagerplatte bestehenden Schwenklagers befähigt sie auch zur Abtragung größerer Lasten. Zur Herstellung solcher Schwenklager werden in den entsprechend vorgeformten, noch mit einer durchgehend zylindrischen Wandung versehenen Schwenklagertopf zunächst die Lagerkugeln und die Schwenklagerplatte eingebracht und erst danach wird die Topfwandung an ihrem offenen freien Rand um 90° und mehr nach innnen umgebördelt. Dieses Umbördeln kann so sorgfältig und schonend vorgenommen werden, daß dadurch die Laufkugeln ihr bestmögliches Bewegungsspiel erhalten und dadurch besonders gute Laufeigenschaften des Schwenklagers erzielt werden. Das Umbördeln bedingt aber, daß dabei bestimmte Wandstärken des Schwenklagertopfes nicht überschritten werden können. Wie die Praxis gezeigt hat, kann es bei diesen Lenkrollen bei sehr hohen und dauerhaften Beanspruchungen zu einer Verschlechterung der Laufeigenschaften ihres Schwenklagers, nämlich zu Schwergängigkeit und Laufunregelmäßigkeiten kommen. Das ist vermutlich darauf zurückzuführen, daß es wegen der bei solchen Lenkrollen versetzten Anordnung ihrer Laufradachse gegenüber der Schwenklagerachse zu starken einseitigen Beanspruchungen insbesondere des um die zuvor eingelegten Kugeln umgebördelten, offenen Schwenklagertopf-Wandungsrandes und dessen dadurch bedingtem mehr oder weniger weiten Aufwölben kommt.

Der Erfindung liegt daher die Aufgabe zugrunde, eine Lenkrolle der eingangs erwähnten Gattung dahingehend zu verbessern und zu vervollkommnen, daß sie insbesondere hinsichtlich ihres Schwenklagers noch stärker und dauerhafter beansprucht werden kann, ohne daß dadurch die erwähnten Laufmängel auftreten.

Diese Aufgabe wird bei einer gattungsgemäßen Lenkrolle erfindungsgemäß dadurch gelöst, daß der einteilige Schwenklagertopf mit einer seinen offenen Wandungsrand zumindest bereichsweise übergreifenden und ihn damit gegen Aufwölbung schützenden Außenverstärkung versehen ist.

Auf diese Weise kann der Schwenklagertopf unter Beibehalt seiner durch das nachträgliche Umbördeln seines offenen Wandungsrandes bedingten optimalen Laufeigenschaften seiner Lagerkugeln durch die entsprechend anzuordnende Außenverstärkung in seiner Lastabtragefähigkeit wie aber auch hinsichtlich seiner Gebrauchstüchtigkeit und -dauer wesentlich verbessert werden.

Durch die US-PS 1 930 622 sind Lenkrollen mit einem zwischen einer das Laufrad tragenden Lenkrollengabel und einem geräteseitig anzubringenden Befestigungselement vorhandenen Schwenklager bekannt, das einen eine darin über einen oberen und unteren Kugellaufkranz schwenkbeweglich gelagerte Schwenklagerplatte umfassenden Schwenklagertopf aufweist, der aus einer oberen und unteren dünnwandigen Topfwandungshülse und einer sie beide außen sowie teilweise auch oben und unten umfassenden und sie dadurch zusammenhaltenden Verbindungsbüchse besteht. Da letztere zum festen Verbinden der beiden inneren, im übrigen nicht miteinander verbundenen Topfwandungshülsen unerläßlich ist und wegen ihrer oberen und unteren Umbördelungen notwendigerweise auch verhältnismäßig dünnwandig beschaffen sein muß, gehört sie somit hier unmittelbar zum Schwenklagertopf und stellt nicht etwa eine zusätzliche Außenverstärkung eines einteiligen Schwenklagertopfes im erfindungsgemäßen Sinne dar.

In den Fällen, in denen der Schwenklagertopf der Lenkrolle an der Lenkrollengabel befestigt und die Schwenklagerplatte mit dem Gerät verdrehungsfest zu verbinden ist, genügt es, wenn die Außenverstärkung aus einer die Schwenklagertopfwandung und deren offenen Rand lediglich in ihrem der Rollen-Laufradachse abgewandt liegenden Bereich umschließenden, entsprechend ausgebildeten Verstärkungskappe besteht, die zweckmäßig am Lenkrollen-Gabelrücken, jedoch grundsätzlich auch an der Schwenklagertopfwandung allein oder zusätzlich befestigt werden kann.

Für den Fall jedoch, daß der Schwenklagertopf mit dem Gerät verdrehungsfest zu verbinden und die Lenkrollengabel an der Schwenklagerplatte zu befestigen ist, besteht die Außenverstärkung vorteilhaft aus einer den Schwenklagertopf und dessen offenen Wandungsrand ringsum dicht umgreifenden Verstärkungsbüchse. Diese schützt also den offenen Topfwandungsrand auf seinem ganzen Umfang gegen unerwünschtes Aufwölben.

Wenn die Lenkrolle mit einer am Schwenklagertopfboden angebrachten und seitlich über ihn hinausragenden Befestigungsplatte versehen ist, wie das häufig der Fall ist, wird die Verstärkungsbüchse vorteilhaft mit der Befestigungsplatte fest verbunden. Hierzu können an dem dem offenen Topfwandungsrand abgewandt liegenden Rand der Verstärkungsbüchse seitlich ausladende Haltelappen vorhanden sein, die in in der Befestigungsplatte entsprechend angeordnete Haltetaschen greifen. Ebensogut aber kann die Verstärkungsbüchse an ihrem dem offenen Topfwandungsrand abgewandt liegenden Bereich einen weiteren Randflansch aufweisen, über den sie auf der Befestigungsplatte aufliegt und an letzterer befestigt, z.B. vernietet ist. Auch kann die Aussenverstärkung an der Befestigungsplatte bzw. der Lenkrollengabel angeschweißt sein. Grundsätzlich ist auch eine entsprechende Klebeverbindung zwischen der Außenverstärkung und der Befestigungsplatte durchaus möglich.

In der Zeichnung sind mehrere Ausführungsbeispiele erfindungsgemäß beschaffener Lenkrollen bzw. ihrer Schwenklager dargestellt. Dabei zeigen
- Fig.1: die geschnittene Seitenansicht einer ersten Ausführungsform der neuen Lenkrolle,
- Fig.2: einen Schnitt nach der Linie II-II der Fig.1,
- Fig.3: eine andere Ausführungsform des Lenkrollen-Schwenklagers in senkrechtem Schnitt und
- Fig.4: eine Ansicht in Pfeilrichtung IV der Fig.3.

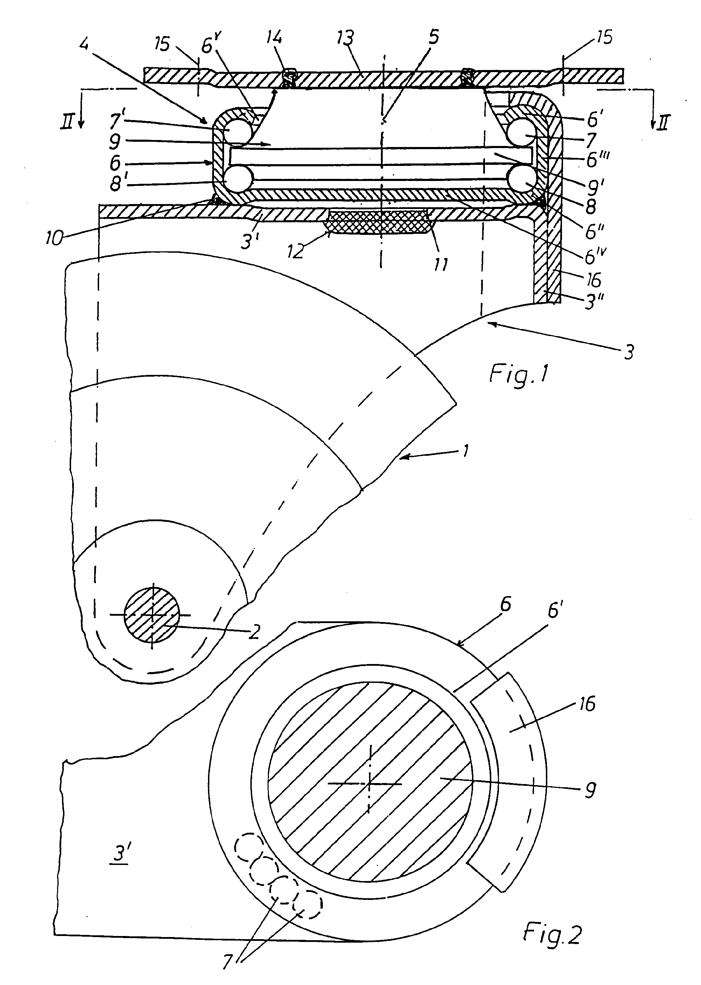

Die in den Fig.1 und 2 abgebildete Lenkrolle besitzt eine das Laufrad 1 und die Radachse 2 tragende Lenkrollengabel 3, die über das über ihr angeordnete Schwenklager 4 um die senkrechte Achse 5 schwenkbeweglich mit dem verfahrbar auszurüstenden Gerät, z.B. einem Müllkontainer, einem Krankenbett od.dgl. verbunden werden kann.

Hierfür besteht das Schwenklager 4 aus einem Schwenklagertopf 6 und einer darin über die Kugellaufkränze 7,8 um die Achse 5 schwenkbeweglich gelagerten Schwenklagerplatte 9. Die Lagerkugeln 7',8' der Kugellaufkränze 7,8 sind an den entsprechend gerundeten Stellen ober- und unterhalb des Schwenklagerplattenbundes 9' einerseits und außen an den zu Lagerkugelführungen entsprechend eingerollten Rändern 6',6'' der im übrigen zylindrisch gestalteten Schwenklagertopfwandung 6''' geführt bzw. abgestützt. Die Herstellung des vorbeschriebenen Schwenklagers erfolgt vorteilhaft in der Weise, daß in den zunächst mit glattwandigem zylindrischem Rand 6''' versehenen Lagertopf 6 der untere Kugellaufkranz 8, die Schwenklagerplatte 9 sowie der obere Kugellaufkranz 7 eingelegt werden und sodann der obere, die Schwenklagertopföffnung 6^{V} umgebende, offene Topfwandungsrand 6' über die an ihm anliegenden Lagerkugeln 7' des oberen Kugellaufkranzes um mehr als 90° nach innen umgebördelt wird.

Im vorliegenden Fall ist der Schwenklagertopf 6 mit einem einstückig mit seiner Wandung 6''' beschaffenen Boden 6^{IV} versehen. Mit seinem unteren Wandungsrand 6'' ist der Schwenklagertopf 6 über die Rundschweißnaht 10 mit dem Rükken 3' der Lenkrollengabel 3 fest verbunden. Im Lenkrollengabelrücken 3' ist zentrisch zur Schwenklagerachse 5 eine Montage- und Zentrieröffnung 11 vorhanden, die durch einen Kunststoffpfropfen 12 verschlossen werden kann.

Die Schwenklagerplatte 9 ist an ihrem oberen, aus dem Schwenklagertopf 6 herausragenden Ende mit der Befestigungsplatte 13 fest verbunden, beispielsweise über die Rundschweißnaht 14. Die im wesentlichen quadratische Befestigungsplatte 13 ist an ihren Ecken mit in Fig.1 nur angedeuteten Schraubbefestigungslöchern 15 versehen, über die sie am nicht dargestellten Gerät bzw. Gerätefuß befestigt werden kann.

In ihrem der Rollen-Laufradachse 2 abgewandt liegenden Bereich werden die Schwenklagertopfwandung 6''' sowie insbesondere ihr oberer offener eingebördelter Rand 6' von einer sie dicht umschließenden Verstärkungskappe 16 umgeben, die in diesem Bereich den offenen Rand 6' gegen unerwünschtes Aufwölben schützt. Die Verstärkungskappe 16 erstreckt sich hier lediglich über einen Winkelbereich von etwa 80°, wie das Fig.2 zeigt. Vorteilhaft ist die Verstärkungskappe 16 am Rand 3'' des Lenkrollengabelrückens 3' befestigt, beispielsweise durch Verschweißung oder Vernietung. In manchen Fällen genügt es auch, die Verstärkungskappe 16 mit dem sie tragenden Geräteteil einfach zu verkleben.

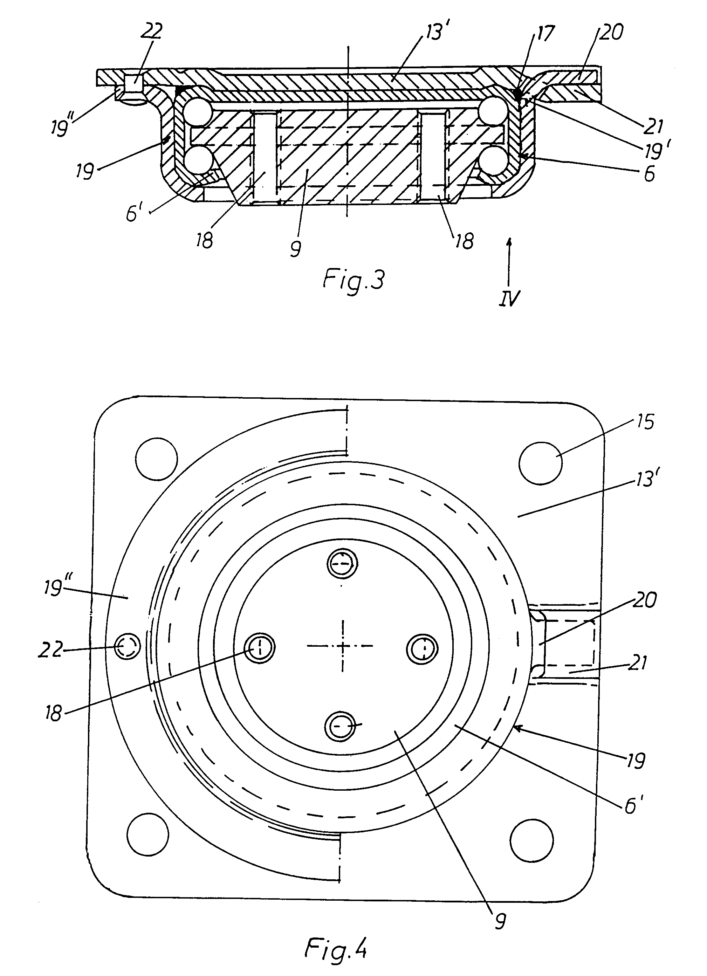

Bei dem in Fig.3 und 4 dargestellten Ausführungsbeispiel ist der Befestigungslagertopf 6 über die Rundschweißnaht 17 mit der geräteseitig zu verbindenden Befestigungsplatte 13' fest verbunden, während die Schwenklagerplatte 9 über die in ihr vorhandenen Schraubbefestigungslöcher 18 und darin einzudrehende Schrauben mit dem Lenkrollengabelrücken 3' fest verbunden werden kann. Da in diesem Falle der die Schwenklagertopföffnung 6^{V} umgebende offene Wandungsrand 6' in seinem gesamten Umfangsbereich von der abzutragenden Last beaufschlagt wird und sich infolgedessen mit der Zeit aufwölben könnte, ist hier als Aussenverstärkung eine Verstärkungsbüchse 19 vorgesehen, die den Schwenklagertopf 6 und dessen offenen Wandungsrand 6' ringsum dicht umgreift. Die Verstärkungsbüchse 19 ist vorzugsweise mit der Befestigungsplatte 13' fest verbunden. Das kann, wie in den Fig.3 und 4 rechts dargestellt, dadurch geschehen, daß an dem dem offenen Topfwandungsrand 6' abgewandt liegenden Rand 19' der Verstärkungsbüchse seitlich ausladende Haltelappen 20 vorgesehen sind, die in an der Befestigungsplatte 13' an entsprechender Stelle ausgeformte Haltetaschen 21 greifen. Ebensogut ist es aber auch möglich, die Verstärkungsbüchse 19, wie links dargestellt, mit einem Randflansch 19'' zu versehen, über den die Verstärkungsbüchse 19 auf der Befestigungsplatte 13' flach aufliegt und an letzterer beispielsweise durch Nietbolzen 22 befestigt ist. Auch eine entsprechende Schweißverbindung zwischen dem Flansch 19'' der Verstärkungsbüchse 19 und der Befestigungsplatte 13' sind hier ohne weiteres möglich.

## Patentansprüche

1. Lenkrolle für damit verfahrbar auszurüstende Geräte, wie z. B. Müllkontainer, Krankenbetten od.dgl., mit einer das Laufrad (1) tragenden Lenkrollengabel (3) und einem an deren Rücken (3') angebrachten sowie am Gerät zu befestigenden Schwenklager (4), das aus einem einteiligen Schwenklagertopf (6) und einer darin über einen oberen und unteren Kugellaufkranz (7,8) schwenkbeweglich gelagerten Schwenklagerplatte (9) besteht, wobei die Kugellaufkränze (7,8) zwischen den Außenumfängen der Schwenklagerplatte (9) einerseits und der im wesentlichen zylindrischen Wandung (6''') des Schwenklagertopfes (6) andererseits liegen, deren die Schwenklagertopföffnung (6^{V}) umgebender offener Rand (6') über den an ihm anliegenden Kugellaufkranz (7) um dessen zuvor eingelegte Kugeln (7') umgebördelt worden ist, **dadurch gekennzeichnet,** daß der einteilige Schwenklagertopf (6) mit einer seinen offenen Wandungsrand (6') zumindest bereichsweise übergreifenden und ihn damit gegen Aufwölbung schützenden Außenverstärkung (16 bzw. 19) versehen ist.

2. Lenkrolle nach Anspruch 1, bei der der Schwenklagertopf (6) an der Lenkrollengabel (3) befestigt und die Schwenklagerplatte (9) mit dem Gerät verdrehungsfest zu verbinden ist, **dadurch gekennzeichnet,** daß die Außenverstärkung aus einer die Schwenklagertopfwandung (6''') und deren offenen Rand (6') lediglich in ihrem der Rollen-Laufradachse (2) abgewandt liegenden Bereich umgreifenden Verstärkungskappe (16) besteht, die am Lenkrollengabelrücken (3') und/ oder an der Schwenklagertopfwandung (6''') befestigt ist.

3. Lenkrolle nach Anspruch 1, bei der der Schwenklagertopf (6) mit dem Gerät verdrehungsfest zu verbinden und die Lenkrollengabel (3) an der Schwenklagerplatte (9) zu befestigen ist, **dadurch gekennzeichnet,** daß die Außenverstärkung aus einer den Schwenklagertopf (6) und dessen offenen Wandungsrand (6') ringsum dicht umgreifenden Verstärkungsbüchse (19) besteht.

4. Lenkrolle nach Anspruch 3, mit einer am Schwenklagertopfboden (13') angebrachten und seitlich über ihn hinausragenden Befestigungsplatte (13'), **dadurch gekennzeichnet,** daß die Verstärkungsbüchse (19) mit der Befestigungsplatte (13') fest verbunden ist.

5. Lenkrolle nach Anspruch 4, **dadurch gekennzeichnet,** daß an dem dem offenen Topfwandungsrand (6') abgewandt liegenden Rand der Verstärkungsbüchse (19) seitlich ausladende Haltelappen (20) vorhanden sind, die in in der Befestigungsplatte (13') entsprechend angeordnete Haltetaschen (21) greifen.

6. Lenkrolle nach Anspruch 4, **dadurch gekennzeichnet,** daß die Verstärkungsbüchse (19) an ihrem dem offenen Topfwandungsrand (6') abgewandt liegenden Bereich einen zusätzlichen Randflansch (19'') aufweist, über den sie auf der Befestigungsplatte (13') aufliegt und an letzterer befestigt, z.B. vernietet ist.

7. Lenkrolle nach einem der Ansprüche 1 bis 6, **dadurch** gekennzeichnet, daß die Außenverstärkung (16 bzw. 19) an der Befestigungsplatte (13') bzw. der Lenkrollengabel (3) angeschweißt ist.

8. Lenkrolle nach einem der Ansprüche 1 bis 6, **dadurch** gekennzeichnet, daß die Außenverstärkung (16 bzw. 19) mit der Befestigungsplatte (13') bzw. der Lenkrollengabel (3) durch Klebung verbunden ist.

## Claims

1. Castor for articles intended to be movable when fitted therewith, such as for example refuse containers, hospital beds and the like, comprising a castor fork (3) carrying the wheel (1), and a swivel bearing (4) mounted on the bridge (3') of the fork and arranged to be secured to the article, the swivel bearing comprising a one-piece swivel bearing cup (6) and a bearing plate (9) mounted for swivelling movement therein between upper and lower ball race rings (7,8), wherein the ball race rings (7,8) lie between the outer periphery of the bearing plate (9) on the one hand and the substantially cylindrical wall (6''') of the cup (6) on the other hand, and wherein the open rim (6') of the cup surrounding the cup opening (6^{V}) is flanged over the ball race (7) in contact therewith about its balls (7') which have previously been fitted, characterised in that the one-piece swivel bearing cup (6) is provided with an outer reinforcement (16 and 19) overlapping its open wall rim (6') at least zonally and thereby protecting it against bulging.

2. Castor according to claim 1, in which the swivel bearing cup (6) is secured to the castor fork (3) and the swivel bearing plate (9) is connected to the article so as to prevent relative rotation therebetween, characterised in that the outer reinforcement consists of a reinforcing cap (16) fitted around the cup wall (6''') and its open rim (6') only in its region which is remote from the castor wheel axis (2), with the reinforcing cap being secured to the fork bridge (3') and/or to the swivel bearing cup wall (6''').

3. Castor according to claim 1, in which the swivel bearing cup (6) is arranged for connection to the article without relative rotation therebetween and the castor fork (3) is arranged to be secured to the swivel bearing plate (9), characterised in that the outer reinforcement consists of a reinforcing sleeve (19) engaging tightly all around the circumference of the swivel bearing cup (6) and its open wall rim (6').

4. Castor according to claim 3, having a fixing plate (13') mounted on the swivel bearing cup base (13') and projecting laterally beyond the latter, characterised in that the reinforcing sleeve (19) is fixedly connected to the fixing plate (13').

5. Castor according to claim 4, characterised in that retaining lugs (20) are provided on the edge of the reinforcing sleeve (19) which is remote from the open cup wall rim (6'), said lugs projecting laterally and engaging in retaining pockets (21) arranged correspondingly in the fixing plate (13').

6. Castor according to claim 4, characterised in that the reinforcing sleeve (19) has an additional peripheral flange (19'') at its region which is remote from the open cup wall rim (6'), by means of which it contacts the fixing plate (13') and by means of which it is secured, for example riveted, to the latter.

7. Castor according to one of claims 1 to 6, characterised in that the outer reinforcement (16 and 19) is welded to the fixing plate (13') or to the castor fork (3).

8. Castor according to one of claims 1 to 6, characterised in that the outer reinforcement (16 and 19) is connected to the fixing plate (13') or to the castor fork (3) by adhesive.

## Revendications

1. Roulette pour équiper des appareils roulant grâce à cette roulette, comme par exemple des poubelles, des lits de malades, etc, comportant une chape de roulette (3) portant la roue mobile (1), et un palier pivotant (4) qui est monté sur le dos (3') de la chape (3) et à fixer à l'appareil, et qui se compose d'un coussinet de palier pivotant (6) en une seule pièce et d'une plaque de palier pivotant (9) montée dans celui-ci pour pouvoir pivoter par l'intermédiaire de couronnes de billes supérieure et inférieure (7, 8), étant précisé que les couronnes (7, 8) se trouvent entre les périphéries extérieures de la plaque de palier pivotant (9), d'une part, et la paroi (6''') du coussinet de palier pivotant (6), sensiblement cylindrique, d'autre part, dont le bord ouvert (6') entourant l'ouverture de coussinet (6^{V}) a été replié sur la couronne de billes (7) appliquée contre lui, autour des billes (7') mises en place préalablement, caractérisée en ce que le coussinet de palier pivotant (6) en une seule pièce est pourvu d'un renforcement extérieur (16 ; 19) couvrant au moins en partie son bord de paroi ouvert (6') et l'empêchant ainsi de se déplier.

2. Roulette selon la revendication 1, dans laquelle le coussinet de palier pivotant (6) est fixé à la chape de roulette (3) tandis que la plaque de palier pivotant (9) doit être reliée, résistante à la torsion, à l'appareil, caractérisée en ce que le renforcement extérieur se compose d'un capot de renforcement (16) qui entoure la paroi (6''') du coussinet de palier pivotant et son bord ouvert (6') uniquement dans leur zone opposée à l'axe de roue (2) de la roulette, et qui est fixé au dos (3') de la chape de roulette et/ou à la paroi (6''') du coussinet de palier pivotant.

3. Roulette selon la revendication 1, dans laquelle le coussinet de palier pivotant (6) doit être relié, résistant à la torsion, à l'appareil, tandis que la chape de roulette (3) doit être fixée à la plaque de palier pivotant (9), caractérisée en ce que le renforcement extérieur se compose d'un manchon de renforcement (19) entourant complètement et de façon étanche le coussinet (6) et son bord de paroi ouvert (6').

4. Roulette selon la revendication 3, comportant une plaque de fixation (13') montée au niveau du fond (13') du coussinet de palier pivotant et dépassant latéralement de celui-ci, caractérisée en ce que le manchon de renforcement (19) est relié fermement à la plaque de fixation (13').

5. Roulette selon la revendication 4, caractérisée en ce qu'il est prévu, au niveau du bord du manchon de renforcement (19) opposé au bord de paroi de coussinet ouvert (6'), des pattes de fixation dépassant latéralement (20) qui viennent en prise dans des poches de fixation (21) disposées en conséquence dans la plaque de fixation (13').

6. Roulette selon la revendication 4, caractérisée en ce que le manchon de renforcement (19) comporte, au niveau de sa zone opposée au bord de paroi de coussinet ouvert (6'), une bride de bord supplémentaire (19'') par l'intermédiaire de laquelle il est appliqué sur la plaque de fixation (13') et fixé, par exemple par rivetage, à celle-ci.

7. Roulette selon l'une des revendications 1 à 6, caractérisée en ce que le renforcement extérieur (16 ; 19) est soudé à la plaque de fixation (13') ou à la chape de roulette (3).

8. Roulette selon l'une des revendications 1 à 6, caractérisée en ce que le renforcement extérieur (16 ; 19) est relié par collage à la plaque de fixation (13') ou à la chape de roulette (3).
